# EUROPÄISCHE PATENTSCHRIFT

(11) **EP 1 539 472 B1**
(45) Veröffentlichungstag und Bekanntmachung des Hinweises auf die Patenterteilung: **02.08.2006**
(21) Anmeldenummer: 03750307.5
(22) Anmeldetag: 03.09.2003
(51) Int. Cl.: B31B 15/00, B65D 5/36, B65D 3/06, B31B 5/76

(54) **VERFAHREN ZUM UMMANTELN EINES KUNSTSTOFFBECHERS MIT EINEM DRUCKTRÄGER**
METHOD FOR COVERING A PLASTIC CUP WITH A PRINT SUBSTRATE
PROCEDE POUR ENTOURER UN GOBELET EN MATIERE PLASTIQUE D'UN SUPPORT D'IMPRESSION

(30) Priorität: 11.09.2002 DE 10242089
(43) Veröffentlichungstag der Anmeldung: 15.06.2005
(73) Patentinhaber: Wilke, Werner Heinz, 40675 Ratingen (DE)
(72) Erfinder: Wilke, Werner Heinz, 40675 Ratingen (DE)
(74) Vertreter: Kohler Schmid Möbus
(86) Internationale Anmeldenummer: PCT/DE2003/002908
(87) Internationale Veröffentlichungsnummer: WO 2004/026568

(56) Entgegenhaltungen:
- WO-A-01/21382
- US-A- 5 445 315
- US-A- 5 454 484

## Beschreibung

Die Erfindung betrifft ein Verfahren zum Ummanteln eines Kunststoffbechers mit einem mittels zweier Falzlinien flach zusammengefalteten Druckträger, der beispielsweise eine Manschette oder Banderole oder dergleichen aus Karton, Papier, Pappe oder Kunststoff sein kann.

Durch die WO 01/21382 A1 ist ein gefalteter, aufrichtbarer Druckträger für einen Kunststoffbecher bekannt geworden.

Ein Verfahrens zum Ummanteln eines Kunststoffbechers ist beispielsweise aus der DE 299 11 272 U1 bekannt geworden.

In der DE 299 11 272 U1 ist eine Maschine zum reihenweisen Tiefziehen von Kunststoffbechern und zum Anbringen eines Druckträgers auf der Außenseite des Kunststoffbechers beschrieben. Die bekannte Maschine weist ein Formgehäuse mit Formnestern auf, in deren Boden eine Öffnung für eine Einführung des Druckträgers aus einem Bereich unterhalb des Formnestbodens in den Formraum der Formnester mittels eines Hubgliedes vorgesehen ist.

Die US 4,497,156 beschreibt ein Verfahren, mit dem gefaltete Verschlusshülsen durch Druck auf die Falzlinien aufgefaltet und über den Verschluss von Flaschen gestülpt werden.

Aufgabe der vorliegenden Erfindung ist es, ein Verfahren zu entwickeln, das die Anbringung der Druckträger verbessert.

Diese Aufgabe wird erfindungsgemäß durch ein Verfahren mit folgender Abfolge von nacheinander durchzuführenden Verfahrensschritten gelöst:
- Der Druckträger wird mittels zweier Falzlinien flach zusammengefaltet.
- Es ist eine die Kontur des Kunststoffbechers aufweisende Form (Aufrichtform) mit einem Einführschlitz für den zusammengefalteten Druckträger vorgesehen.
- Der flach zusammengefaltete Druckträger wird der Form mit einer Einführrichtung quer zu den Falzlinien zugeführt, wobei der Durchmesser der Form kleiner ist als die Erstreckung des zusammengefalteten Druckträgers quer zu den Falzlinien.
- Der zusammengefaltete Druckträger wird vollständig in die Form eingeführt, wobei ein selbsttätiges Aufrichten des Druckträgers und ein Anlegen an die Innenwand der Form erfolgt.
- Ein Kunststoffbecher wird in die mit dem Druckträger ausgekleidete Form eingesetzt.

Die Druckträger werden durch Verkleben zu einer Hülse und anschließendes flaches Falten vorkonfektioniert.

Bei einer bevorzugten Weiterbildung des erfindungsgemäßen Verfahrens ist eine Transporteinrichtung zur Bewegung der Formen und zur Gruppenbildung der Formen zur gewünschten Nutzenzahl vorgesehen, die im Regelfall der Gruppierung der Becher auf der vorgeschalteten Anlage entspricht. Diese Anlage dient der Kunststoffbecherherstellung und/oder der Kunststoffbecherbefüllung. Bei der Gruppierung und dem Transport der Formen schiebt eine nachfolgende Form den zusammengefalteten Druckträger in die vorhergehende Form. Dies verbessert die Automatisierung der Maschine und spart separate Hubglieder zur Bewegung und Einführung der Druckträgern in die Form.

Sinnvoll ist es auch, dass der Druckträger nach innen zwischen die zusammengefalteten Druckträgerteile klappbare Bodenteile aufweist. Der Druckträgerboden klappt ebenso selbsttätig herunter wie sich der Druckträger aufrichtet. Der Kunststoffbecher wird so eingesetzt, dass ein Ummanteln der Außenumfangsfläche und ein Abdecken des Bodens eintritt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Ein bevorzugtes Ausführungsbeispiel der Erfindung ist in der Zeichnung schematisch dargestellt und wird anhand der Zeichnung näher erläutert. Es zeigt:
- **Fig.** 1: eine Draufsicht eines Zuschnitts eines Druckträgers zum Ummanteln eines Kunststoffbechers;
- **Fig.** 2: eine Prinzipdarstellung eines Verfahrens zum Aufrichten des Druckträgers nach Fig. 1;
- **Fig.** 3: eine Kombination des Verfahrens nach Fig. 2 mit einer Maschine zum Gruppieren von mit Druckträgern versehenen Formen.

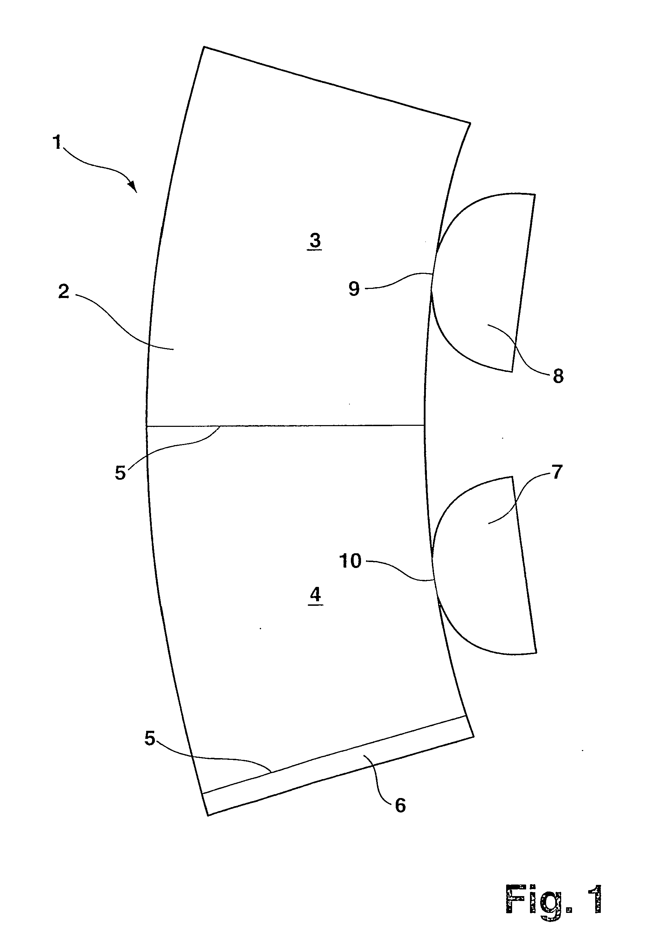

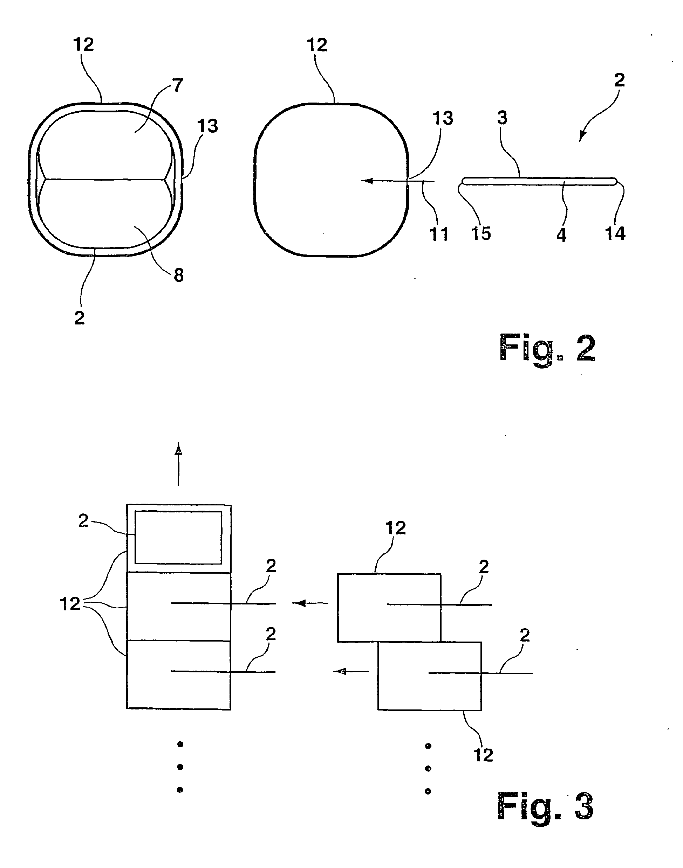

Aus der **Figur** 1 ist ersichtlich, dass ein Zuschnitt **1** zur Ausbildung eines Druckträgers **2** mit einem im aufgerichteten Zustand runden Querschnitt zwei gleich große Druckträgerteile **3** und **4** umfasst, welche durch eine entsprechend bearbeitete erste Falzlinie **5** getrennt sind. Eine zweite Falzlinie 5 ermöglicht das Zusammenfalten eines zu einer Hülse verbundenen Druckträgers 2 (siehe Fig. 2). Eine Verbindung der Druckträgerteile 3 und 4 ist mittels einer Klebelasche **6** möglich. Zwei Bodenteile **7** und **8** sind über Falzlinien **9** und **10** mit dem Druckträger 2 verbunden. Vor der Verarbeitung wird der Druckträger 2 auf die Größe eines Druckträgerteils 3 bzw. 4 flach zusammengefaltet werden. Dabei sind die Bodenteile 7 und 8 nach innen geklappt.

In einer Prinzipdarstellung gemäß **Fig.** 2 ist die Verarbeitung des flach zusammengefalteten Druckträgers 2 gezeigt. Der derart vorbereitete Druckträger 2 wird in Pfeilrichtung **11** (Einführrichtung) einer Form **12** mit einem in Längsrichtung der Form verlaufenden, sich bis zum Boden der Form 12 erstreckenden, seitlichen Einführschlitz **13** zugeführt. Die Form 12 ist der Kontur eines Kunststoffbechers nachgebildet und gegenüber dem Kunststoffbecher geringfügig größer dimensioniert. Durch Druck auf das Ende **14** des Druckträgers 2 wird dieser in die Form 12 geschoben, bis das gegenüberliegende Ende **15** des Druckträgers 2 an der Innenwand der Form 12 anschlägt. Eine weitere Druckbeaufschlagung in Folge weiteren Nachschiebens führt dazu, dass die entstehende Spannung zur Aufrichtung des zusammengefalteten Druckträgers 2 im Innern der Form 12 führt. Gleichzeitig klappen nun die Bodenteile 7 und 8 herunter und bilden einen Kartonboden. Ein in der Figur 2 nicht gezeigter Kunststoffbecher kann in die Form 12 und in den aufgerichteten Druckträger 2 eingesetzt werden. Bei entsprechender Dimensionierung von Form 12, Druckträger 2 und Kunststoffbecher liegt der Druckträger 2 eng an dem Kunststoffbecher an. Der Kunststoffbecher kann aus der Form 12 zusammen mit dem anliegenden Druckträger 2 herausgezogen werden, so dass sich eine Einheit aus Kunststoffbecher und Druckträger 2 ergibt. Die Verbindung zwischen Kunststoffbecher und Druckträger 2 kann durch geeignete Klebemittel unterstützt werden.

**Fig.** 3 deutet an, wie eine Verwendung des erfindungsgemäßen Verfahrens mit einer Maschine zum Gruppieren von Formen (Aufrichtformen) kombiniert werden kann. Die Maschine kann auch als Erfindung angesehen werden. Das Verfahren kann in Verbindung mit einer Transporteinrichtung Formen 12 und Druckträger 2 zusammenführen und vorkonfektionieren, damit anschließend tiefgezogene Kunststoffbecher direkt in die in der Form 12 aufgerichteten Druckträger 2 eingesetzt werden können. Dabei kann der Transport der Formen 12 und Druckträger 2 so koordiniert werden, dass die Formen 12 durch ihre Bewegung die Enden der Druckträger druckbeaufschlagen und in die Formen 12 hinein schieben. Neben dem "selbsttätigen" Einschieben der Druckträger 2 durch nachfolgende Formen 12 in vorhergehende Formen 12 können zusätzlich Schubeinrichtungen vorgesehen sein, um Druckträger 2 einzuschieben. Dies wird insbesondere notwendig, wenn einer Einheit einer Form 12 und eines Druckträgers 2 eine Partnereinheit zum Zusammenspiel fehlt.

### BEZUGSZEICHENLISTE

- 1: Zuschnitt
- 2: Druckträger
- 3: Druckträgerteil
- 4: Druckträgerteil
- 5: Falzlinie
- 6: Klebelasche
- 7: Bodenteil
- 8: Bodenteil
- 9: Falzlinie
- 10: Falzlinie
- 11: Einführrichtung
- 12: Form
- 13: Einführschlitz
- 14: Ende
- 15: Ende

## Patentansprüche

1. Verfahren zum Ummanteln eines Kunststoffbechers mit einem mittels zweier Falzlinien (5) flach zusammengefalteten Druckträger (2), **gekennzeichnet durch** folgende Verfahrensschritte:
a) Eine die Kontur des Kunststoffbechers aufweisende Form (12) ist mit einem Einführschlitz (13) für den zusammengefalteten Druckträger (2) vorgesehen.
b) Der flach zusammengefaltete Druckträger der Form wird mit einer Einführrichtung (11) quer zu den Falzlinien (5) zugeführt, wobei der Durchmesser der Form (12) kleiner ist als die Erstreckung des zusammengefalteten Druckträgers (2) quer zu den Falzlinien (5).
c) Der zusammengefaltete Druckträger (2) wird vollständig in die Form (12) eingeführt, wobei ein selbsttätiges Aufrichten des Druckträgers (2) und ein Anlegen an die Innenwand der Form (12) erfolgt.
d) Ein Kunststoffbecher wird in die mit dem Druckträger (2) ausgekleidete Form (12) eingesetzt.

2. Verfahren nach Anspruch 1, **dadurch gekennzeichnet, dass** eine Transporteinrichtung zur Bewegung der Form (12) vorgesehen ist, so dass eine nachfolgende Form (12) den zusammengefalteten Druckträger (2) in die vorhergehende Form (12) schiebt.

## Claims

1. Method for covering a plastic beaker with a print substrate (2) that is folded flat by means of two fold lines (5), **characterized by** the following method steps:
a) a mould (12) having the contour of the plastic beaker is provided with an insertion slot (13) for the folded-flat print substrate (2).
b) the folded-flat print substrate is fed to the mould transversely with respect to the fold lines (5) by an insertion device (11), the diameter of the mould (12) being smaller than the extent of the folded-flat print substrate (2) transverse with respect to the fold lines (5).
c) the folded-flat print substrate (2) is inserted completely into the mould (12), automatic erection of the print substrate (2) and placement against the inner wall of the mould (12) taking place.
d) a plastic beaker is inserted into the mould (12) lined with the print substrate (2).

2. Method according to Claim 1, **characterized in that** a transport device for moving the mould (12) is provided, so that a following mould (12) pushes the folded-flat print substrate (2) into the preceding mould (12).

## Revendications

1. Procédé pour revêtir un gobelet en matière plastique d'un support d'impression (2), plié à plat au moyen de lignes de pliage (5), **caractérisé par** les étapes suivantes :
a) un moule (12) ayant la forme du contour du gobelet en matière plastique est prévu avec une fente d'introduction (13) pour le support d'impression (2) plié ;
b) le support d'impression plié à plat est acheminé vers le moule dans une direction d'introduction (11) perpendiculaire aux lignes de pliage (5), le diamètre du moule (12) étant plus petit que le support d'impression (2) plié dans sa dimension perpendiculaire aux lignes de pliage (5) ;
c) le support d'impression (2) plié est introduit complètement dans le moule (12), le support d'impression (2) se redressant automatiquement et s'appliquant contre la paroi intérieure du moule (12) ;
d) un gobelet en matière plastique est introduit dans le moule (12) revêtu intérieurement du support d'impression (2).

2. Procédé selon la revendication 1, **caractérisé en ce qu'**il est prévu un dispositif de transport pour déplacer le moule (12), de telle sorte qu'un moule (12) consécutif pousse le support d'impression (2) plié dans le moule (12) précédent.
